# EUROPÄISCHE PATENTANMELDUNG

(11) **EP 2 080 905 A1**
(43) Veröffentlichungstag der Anmeldung: **22.07.2009**
(21) Anmeldenummer: 08001004.4
(22) Anmeldetag: 20.01.2008
(51) Int. Cl.: F03G 7/06

(54) **Verfahren und Vorrichtung zur Energieumwandung**

(71) Anmelder: Dehof, Karl, 76726 Germersheim (DE)
(72) Erfinder: Dehof, Karl, 76726 Germersheim (DE)

(57) **Zusammenfassung**

Es werden ein Verfahren sowie eine Vorrichtung zur Umwandlung von Wärme in mechanische Energie vorgestellt. Die Vorrichtung besteht aus zwei miteinander gekoppelten Bälgen, die mit einem Medium mit relativ geringer Verdampfungstemperatur gefüllt sind. Durch Erwärmung und anschließende Abkühlung wird eine Auf- und Abbewegung der Bälge mittels einer geeigneten Vorrichtung in mechanische Energie umgewandelt.

## Beschreibung

### Vorwort:

Zur Energiegewinnung werden verschiedene Ressourcen genutzt, wie Sonnenlicht, Windkraft, Meeresströmung und Wellengang, Schwerkraft in Wasserkraftwerken, sowie brennbare Stoffe mit extrem hoher Belastung der Umwelt.
Außer der zuletzt erwähnten Nutzungsweise, unterliegen alle Anderen mehr oder weniger großen, natürlichen, wie auch zeitlich bedingten Einschränkungen.
Eine natürliche Ressource, die unerschöpflich und auf allen Punkten der Erde, als stets gleich bleibende Kraft zur Verfügung steht, ist den Menschen allgemein bekannt, und wird in den Schulen bereits in den unteren Lehrgangsstufen behandelt. Diese Ressource jedoch blieb bislang ungenutzt, obwohl der Effekt dieser Ressource bereits im Mittelalter entdeckt wurde und eine unenmessliche Kraft beinhaltet
Diese Ressource heißt **"atmosphärischer Druck".**
Der Druck der Atmosphäre ist überall auf der Erde gleich groß, und je nach Höhe, mit einer geringen Minderung vorhanden.
Bei einem lange zurückliegenden Versuch wurde in unbewusster Weise der vorerwähnte Effekt einmal genutzt, doch durch den hohen thermischen Aufwand konnte kein nennenswerter Energiegewinn erzielt werden, weshalb er wieder vernachlässigt wurde.
Es handelte sich hierbei um den Sterlingmotor.
Die Nutzung des atmosphärischen Druckes wird möglich, wenn das bisherige Prinzip, den atmosphärischen Druck, durch einen weitaus höher erzeugten Gegendruck zu überwinden, umgekehrt wird und nicht gegen, sondern im Einklang mit diesem Druck und einer entsprechenden Anordnung von Einrichtungen die Kraft des atmosphärischen Druckes zur
Nutzung freigesetzt wird.

### Verfahrens- und Systembeschreibung:

Die Nutzungseinrichtungen beinhalten 3 Stufen mit unterschiedlich wirkenden Prinzipien.
Das Prinzip der unteren Stufe ist weltweit bekannt und seit langer Zeit vielfach in Nutzung, doch wird die erzeugte Energie dieses Prinzips nur einseitig genutzt.
Zur vollen Nutzung bedarf es eines technischen Umbaus mit Speicherung der gewonnenen Energie. Das heißt, es wird ähnlich dem Prinzip bei Kühlgeräten, sowohl die erzeugte Wärme als auch die Kälte genutzt und beide Energien, Wärme und Kälte in Anwendung gebracht, jedoch nicht direkt sondern über Elemente in denen diese Energien gespeichert wurden. Diese Anlage ist ein in sich geschlossenes System und nur soweit offen, als die gespeicherten Energien, Wärme und Kälte über Berührungsflächen auf die zweite Stufe übertragen werden.
In der zweiten Stufe wird mit dem gleichen Medium wie in der ersten Stufe, jedoch in einem umgekehrten Prozess verfahren. Hier wird nicht wie zuvor, durch Kompression Wärme und nach Druckentspannung Kälte erzeugt, sondern durch Verfabrensumkehrung ein anderer Weg beschritten. Ein Medium mit sehr niedrigem Siedepunkt wird durch Erwärmung zum Verdampfen gebracht, wodurch eine Volumenerweiterung bewirkt wird. Weil der Siedepunkt des Mediums nach Celsius im Kältebereich liegt, ist der Energieaufwand zur Veränderung der Aggregatzustände des Mediums sehr gering und die Zeitspanne zur Umkehrung des Verfahrens verhältnismäßig kurz.
Diese Effekte werden in der nachfolgenden Beschreibung der Energiegewinnungsanlage in Nutzanwendung gebracht.
In der 1. Stufe wird wie bei Kühlgeräten Wärme und Kälte erzeugt und beide Energien durch Übertragung in die Elemente der Stufe 2 genutzt.
Die Energien Wärme und Kälte werden über spezielle Speicherelemente, durch Berührungsfächen übertragen.
Die Elemente der Stufe 2 sind, wie im Schema dargestellt, als geschlossene Bälge konstruiert, wobei durch die Erwärmung des darin enthaltenen Mediums, kurz über den Siedepunkt, eine Verdampfung des Mediums einsetzt, die eine Volumenvergrößerung gegen den atmosphärischen Druck bewirkt.
Durch die anschließende Kühlung unter den Siedepunkt wird eine Kondensation des Mediums eingeleitet, die eine Kontraktion des Volumens zur Folge hat. Bei dieser Kontraktion wird der atmosphärischen Druckes als Pressdruck auf den Balg wirksam, der bei einer Grundfläche von 50 x 50 cm, mit 2500 kg Gewichtsdruck wirkt.
Der Effekt der bei der Volumenminderung durch Kondensation des Mediums in Verbindung mit der Kraft des atmosphärischen Druckes erzeugt wird bewirkt, dass mit dem Balg bei der Zusammenpressung eine Bewegungsenergie entsteht die mittels Zugketten in die Stufe 3 weiter geleitet und dort auf drehbare Achsen übertragen wird.
So liegt der nutzbare Effekt zur Energiegewinnung nicht auf der Seite der Expansion, sondern auf der Seite der Kontraktion, weil dort der atmosphärisch Druck mitwirkt.
Die Bälge sind also in Faltenform zusammenlegbar, und zur Verstärkung gegen den Druck auf die Seitenflächen, sind sie sowohl innen als auch außen in stabilen Rahmen gefasst, sodass die Volumenvergrößerung, wie auch die -minderung allein über den Balghub erfolgt.
Da der Boden des Balges auf einer Unterlage befestigt ist, bewegt sich die Oberseite des Balges bei der Volumenverkleinerung nach unten. Je nach Eignung können auch andere Balgformen gewählt werden.
In der Stufe 2 sind im Aufbau mehrere Bälge in Gruppen angeordnet. Die Bälge haben gleiche Größen mit gleichem Volumen und jeder ist mit dem befüllten Medium in sich eine geschlossene Einheit Die in der Beschreibung gewählte und im Schema dargestellte Form des Balges hat einen quadratischen Boden und die Seitenflächen bilden jeweils ein gleichseitiges Dreieck. Der obere Abschluss ist eine kleine Platte und dient zur Befestigung des darunter liegenden Balges und der oberhalb befestigten Zugkette.
Zugleich wird jeweils ein Balgpaar durch eine Kette miteinander verbunden und so zicht der zweite Balg bei der nachfolgenden Kontraktion die Kette wieder auf die Gegenseite zurück. Die wechselnde Zugrichtung bedingt, dass die Kette über Ritzel an einem parallel verlaufenden Achsenpaar geführt wird, wobei die Kette jeweils in Zugrichtung über das Ritzel mit einer der Achsen in festem Eingriff verbunden ist und in Gegenrichtung Freilauf hat.
Die beiden Achsen stehen über Zahnräder miteinander in Verbindung, wodurch bewirkt wird, dass die Drehbewegung der Achsen sich immer in gleicher Richtung fortsetzt und auch das Drehmoment nicht unterbrochen wird.
Um eine dauerhaft gleichmäßige Drehbewegung der Achse zu sichern, sollten wenigstens zwei Gruppen mit je 4 Bälgen als Einheit zusammen wirken und im Arbeitsablauf zeitlich so versetzt sein, dass das Drehmoment stets gleich bleibend wirkt.
Zur Steigerung des Nutzeffektes können mehrere Einheiten hintereinander, nebeneinander oder übereinander angeordnet werden und auch die Bälge, je nach ihrer Stabilität, größer dimensioniert sein.
In der Stufe 2 sind in einer Gruppe vier Bälge so angeordnet, dass ihre Grundflächen vom Mittelpunkt der Gruppe als auch in ihrem seitlichen Abstand vollkommen identisch sind mit der Anordnung der darunter wirkenden Energiespeicher der Stufe 1.
Durch die Identität der Anordnung in den Stufen 1 und 2 wird erreicht, dass zur Übertragung der gespeicherten Kälte- Wärmeenergie von Stufe 1 auf 2, die Speichergruppe der Stufe 1 nur in einem Viertelkreissektor vor oder zurück bewegt werden muss, um den Wechsel von Kühlung auf Erwärmung und umgekehrt zu bewirken.
Durch das hohe Drehmoment das auf die Achsen wirkt, kann diese Antriebsenergie überall und jederzeit genutzt werden und kann durchgehend in Betrieb sein, ob Nutzung oder auch nicht, ob stationär oder in bewegten Objekten, ohne Anlaufzeit immer sofort verfügbar, vom geringsten bis zum größten Bedarf.
Zur Effizicnzberechnung sei auf den Energieverbrauch des Kompressors der Primärstufe hingewiesen, der in einer Gruppe je 2 Kälte-/Wärmespeicher auflädt, mit einer Leistung von maximal 300 Watt, und im gegensätzlichen Vergleich dazu, der atmosphärische Druck der auf einer Fläche von 50 × 5o cm mit 2500 kg, oder bei 1 qm mit 10 000 kg wirkt verwiesen.
Bei einer Grundfläche 50 × 50 cm wird eine Hubhöhe des Balges von ca. 35 cm erreicht.
Mit der Volumenvexgrößerung bei den Bälgen, wird zugleich die Zeitspanne vergrößert, die benötigt wird zur Änderung der Aggregatzustände des Mediums.
Diese kurze Unterbrechung im Arbeitsablauf hat keine Auswirkung auf die Fortbewegung der Achsen, denn durch die Eigenschaft des Freilaufes der Ritzel wird die fortlaufende Kraftübertragung der weiteren Bälge auf die Achsen nicht behindert.
Zum Schluss sei noch angemerkt:
Die vielfach geäußerte Ansicht, man könne nicht mehr Energie gewinnen, als man zuvor investiert hat, ist mit dieser neuen Weise ad absurdum geführt und wenn jemand in der neuen Weise der Energiegewinnung ein Paradoxon erkennt, dann ist es eben ein neues Paradoxon neben den vielen Anderen.

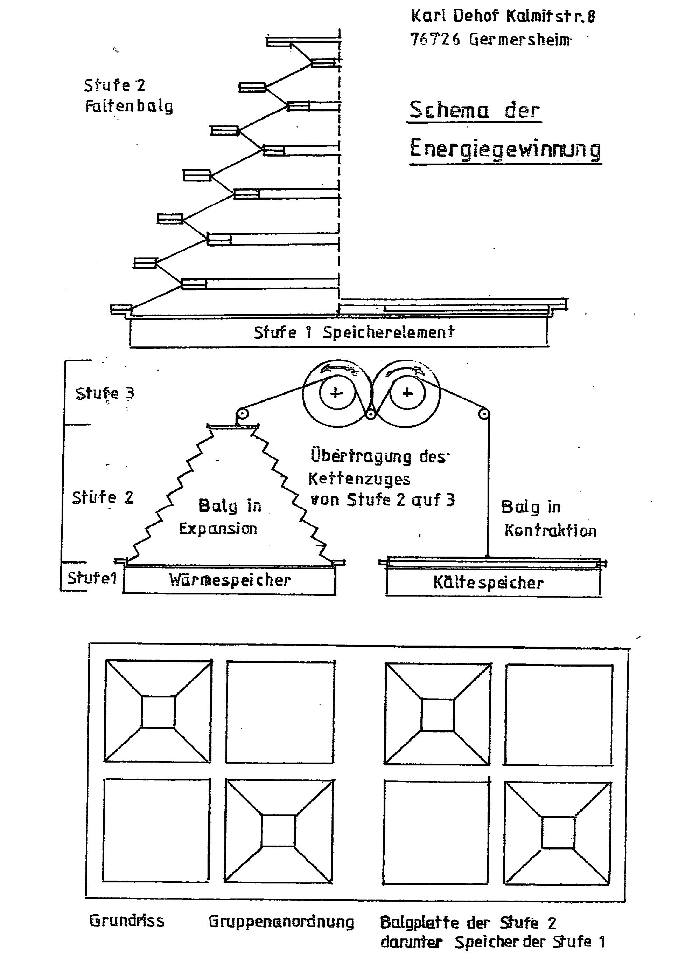

## Patentansprüche

1. Wie aus der Patentbeschreibung zu entnehmen ist, soll auf alle darin beschriebenen Neuerungen Patentanspruch erhoben werden, als da sind:
**A) Die Verfahrensweise der Energiegewinnung.**
**B) Die technische Ausstattung der Anlage.**
**A.1)**Die Speicherung der erzeugten Kälte-/ Wärmeenergie in separate Speicherplatten, zur Übertragung derselben über Berührungsflächen, auf andere Elemente der Anlage.
**A.2)** Verfahrensumkehrung der Wärme -/ Kälteerzeugung durch Kompressordruck, wobei das gleiche Medium in geschlossenen Bälgen, durch die Übertragung von Wärme und der Erwärmung über den Siedepunkt verdampft und eine Volumenvergrößerung gegen den atmosphärischen Druck bewirkt und bei der Abkühlung unter den Siedepunkt kondensiert und **dadurch** eine Volumenverkleinerung bewirkt, bei der der atmosphärische Druck voll zur Wirkung kommt.
**A.3)** Die Volumenvergrößerung bzw, -verkleinerung in den geschlossenen, Balgförmigen Elementen bewirkt, dass dabei eine Bewegungsenergie erzeugt wird.
**A.4)** Die Bewegungsenergie wird auf drehbare Achsen übertragen, um sie einer Nutzung zuzuführen.
**B.1)**Die Speicherplatten für die Kälte-/ Wärmespeicherung, sind als stabile Elemente konstruiert, die dem atmosphärischen Druck, der von allen Seiten wirkt, widerstehen.
Diese können ganz aus Metall gefertigt sein, aber auch mit einem flüssigen, kälte-/wärmeresistenten Medium befüllt sein und in der Form so gestaltet, dass sie zu den Übertragungsflächen der Balgelemente passen..
**B.2)** Die balgförmigen Elemente können sowohl eckigen als auch runden oder auch ovalen Grundriss haben, sollen als Faltenbalg, flach zusammenlegbar und sowohl innen als auch außen mit Rahmen an den Balgfalten verstärkt sein, um dem atmosphärischen Druck zu widerstehen und so in der Größenabstufung beschaffen sein, dass sie sich nicht gegenseitig behindern, wenn sie flach zusammengedrückt werden. Hierdurch ergibt sich im Aufbau der Bälge ganz von selbst eine Pyramiden- oder Kegelform.
**B.3)** Durch die Anordnung von Balgpaaren, die über eine Zugkette miteinander verbunden sind, wird eine Wechselbewegung **dadurch** erreicht, dass der Balg in Kühlphase die Verbindungskette nach unten zieht, währen der andere Balg durch die Erwärmung im Stadium der Expansion ist und sich zur gleichen Zeit erhebt.
**B.4)**Um die wechselnde Zugrichtung der Verbindungskette in eine einheitlich fortlaufende Drehbewegung wirken zu lassen, wird diese über Ritzel an einem parallel verlaufenden Achsenpaar geführt, wobei die Ritzel jeweils in der Zugrichtung der Kette, mit einer der Achsen in festem Eingriff steht und in der Gegenrichtung Freilauf hat. Das Achsenpaar ist über Zahnräder so miteinander verbunden, dass sich die Drehbewegung immer in der gleichen Richtung fortsetzt, und durch die zeitliche Versetzung im Arbeitsablauf der Bälge, das Drehmoment nicht unterbrochen wird.
**Resuemee:**
In der Zusammenfassung kann gesagt werden, dass die Energiegewinnungsanlage über fünfzig mal mehr Energie erzeugt, als sie selbst verbraucht und diese Erzeugung nicht nur absolut umweltneutral sondern auch unerschöpflich ist und zudem überall auf der Welt, von Jedermann, zu jeder Zeit mit dieser Gewinnungsanlage zu haben ist.
